(19) **Europäisches Patentamt European Patent Office Office européen des brevets**

(11) **EP 4 332 526 B1**

(12) **EUROPEAN PATENT SPECIFICATION**

(45) Date of publication and mention
of the grant of the patent:
**25.06.2025 Bulletin 2025/26**

(21) Application number: **21944144.1**

(22) Date of filing: **03.06.2021**

(51) International Patent Classification (IPC):
**G01J 5/48** *(2022.01)*

(52) Cooperative Patent Classification (CPC):
**H04N 23/23; G01J 5/0025; G01J 5/026;**
**G01J 5/0275; G01J 5/0859; G01J 5/0896;**
G01J 2005/0077

(86) International application number:
**PCT/JP2021/021110**

(87) International publication number:
**WO 2022/254642 (08.12.2022 Gazette 2022/49)**

(54) **TEMPERATURE MEASURING DEVICE AND TEMPERATURE MEASURING METHOD**

TEMPERATURMESSVORRICHTUNG UND TEMPERATURMESSVERFAHREN

DISPOSITIF DE MESURE DE TEMPÉRATURE ET PROCÉDÉ DE MESURE DE TEMPÉRATURE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**06.03.2024 Bulletin 2024/10**

(73) Proprietor: **MITSUBISHI ELECTRIC**
**CORPORATION**
**Chiyoda-ku**
**Tokyo 100-8310 (JP)**

(72) Inventors:
• **KOBAYASHI, Satoi**
**Tokyo 1008310 (JP)**
• **YANAGISAWA, Takayuki**
**Tokyo 1008310 (JP)**

(74) Representative: **Pfenning, Meinig & Partner mbB**
**Patent- und Rechtsanwälte**
**Theresienhöhe 11a**
**80339 München (DE)**

(56) References cited:
JP-A- 2000 097 777   JP-A- 2005 037 366
JP-A- 2020 139 866   JP-A- H09 218 100
US-A1- 2012 307 046   US-B2- 7 813 889

• FUWEN LAI: "Thermal image enhancement
through the deconvolution methods for low-cost
infrared cameras", QIRT JOURNAL -
QUANTITATIVE INFRARED THERMOGRAPHY :
AN INTERNATIONAL JOURNAL ON IR
THERMOGRAPHY, 9 May 2018 (2018-05-09),
Cachan Cedex, pages 1 - 17, XP093161062, ISSN:
1768-6733, DOI: 10.1080/17686733.2018.1441956
• MATSUDA, JIN'ICHI: "Image processing of
thermography", BME, vol. 3, no. 7, 30 November
1988 (1988-11-30), JP
, pages 24 - 30, XP009541757, ISSN: 0913-7556,
DOI: 10.11239/jsmbe1987.3.7_24

## Description

TECHNICAL FIELD

The present disclosure relates to a temperature measuring device and a temperature measuring method.

BACKGROUND ART

A thermal image correcting device that is an example of a temperature measuring device and is described in Patent Literature 1 acquires a temperature distribution of an observation target from a thermal image of the observation target captured by a camera.

US2012307046A1 discloses methods and apparatus, including cameras and computer program products, implementing and using techniques for determining a temperature of a distant object in several temperature measurement points. A thermal image sensor measures thermal radiation from a distant object in several thermal measurement points on the object. A distance determination device includes an image sensor and calculates a distance to the object in several distance measurement points. A thermal image indicating an amount of thermal radiation from each thermal measurement point on the object is captured by the thermal image sensor. Reflected light from the object is captured by the image sensor. US7813889B2 discloses an Infrared (IR) thermometer including an IR detector configured to provide an IR emission data representative of a temperature of an area of tissue. The IR thermometer also includes one or more secondary sensors configured to provide an IR thermometer positioning data. At least one microcomputer is configured to receive the IR thermometer positioning data from one or more secondary sensors. The at least one microcomputer is configured to run an algorithm to convert the IR thermometer positioning data to an IR thermometer positioning indication, wherein the IR thermometer positioning indication suggests a direction to move the IR thermometer for a substantially optimal IR detector view of the area of tissue. The invention also relates to a guiding means including a positioning sensor and a display of IR thermometer positioning information, and a method for positioning an IR thermometer. FUWEN LAI: "Thermal image enhancement through the deconvolution methods for low-cost infrared cameras", QIRT JOURNAL - QUANTITATIVE INFRARED THERMOGRAPHY AN INTERNATIONAL JOURNAL ON IR THERMOGRAPHY, 9 May 2018 (2018-05-09), pages 1-17, XP093161062 discloses techniques for enhancing thermal images captured by low-cost infrared cameras through deconvolution methods.

CITATION LIST

PATENT LITERATURES

Patent Literature 1: JP 2020-153737 A

SUMMARY OF INVENTION

TECHNICAL PROBLEM

According to the above thermal image correcting device, using for the above camera a low-cost lens such as a lens whose cost of a material or number of lenses is reduced expands the above thermal image. As a result, there has been a problem that the accuracy of the temperature distribution of the observation target to be acquired deteriorates.

An object of the present disclosure is to provide a temperature measuring device and a temperature measuring method that improve accuracy of temperatures of measurement targets.

SOLUTION TO PROBLEM

The invention is defined in the appended set of claims.

ADVANTAGEOUS EFFECTS OF INVENTION

The temperature measuring device according to the present disclosure can improve accuracy of temperatures of measurement targets.

BRIEF DESCRIPTION OF DRAWINGS

FIG. 1 is a functional block diagram of a temperature measuring device TMD according to Embodiment 1.
FIG. 2A illustrates a visible light image KG (part 1) according to Embodiment 1.
FIG. 2B illustrates the visible light image KG (part 2) according to Embodiment 1.
FIG. 3A illustrates an IR image IRG (part 1) according to Embodiment 1.
FIG. 3B illustrates the IR image IRG (part 2) according to Embodiment 1.
FIG. 4A illustrates an IR illumination image IRSG (part 1) according to Embodiment 1.
FIG. 4B illustrates an IR illumination image IRSG (part 2) according to Embodiment 1.
FIG. 5 illustrates a configuration of the temperature measuring device TMD according to Embodiment 1.
FIG. 6 is a flowchart illustrating an operation of the temperature measuring device TMD according to Embodiment 1.
FIG. 7 illustrates a range ZHH of image expansion ZH according to Embodiment 1.
FIG. 8A illustrates the image expansion range ZHH according to Embodiment 1.
FIG. 8B illustrates an image expansion amount ZHR according to Embodiment 1.
FIG. 9 is a functional block diagram of the temperature measuring device TMD according to Embodiment 2.
FIG. 10A illustrates a distance image DG (part 1) according to Embodiment 2.
FIG. 10B illustrates the distance image DG (part 2) according to Embodiment 2.
FIG. 11 is a flowchart illustrating an operation of the temperature measuring device TMD according to Embodiment 2.
FIG. 12 is a functional block diagram of the temperature measuring device TMD according to Embodiment 3.
FIG. 13 is a flowchart illustrating an operation of the temperature measuring device TMD according to Embodiment 3.

DESCRIPTION OF EMBODIMENTS

Embodiments of a temperature measuring device according to the present disclosure will be described.

Embodiment 1.

<Embodiment 1>

The temperature measuring device according to Embodiment 1 will be described.

<Function According to Embodiment 1>

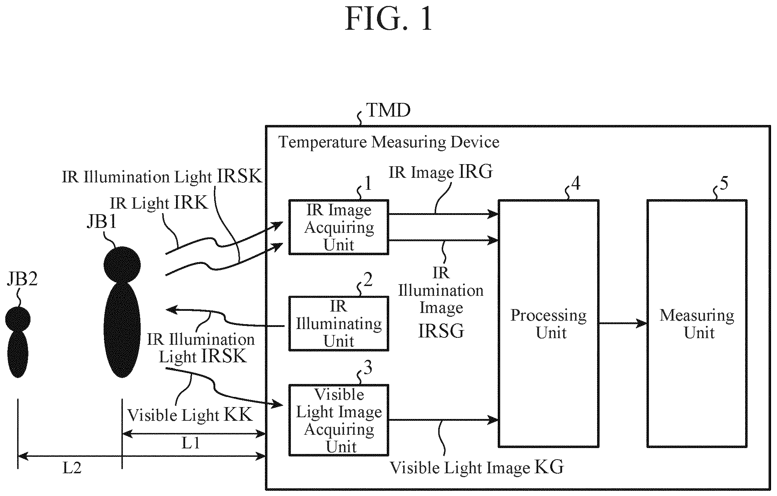

FIG. 1 is a functional block diagram of a temperature measuring device TMD according to Embodiment 1.
As illustrated in FIG. 1, the temperature measuring device TMD according to Embodiment 1 includes an IR image acquiring unit 1, an IR illuminating unit 2, a visible light image acquiring unit 3, a processing unit 4, and a measuring unit 5.
The IR image acquiring unit 1 corresponds to a "thermal infrared image acquiring unit" and a "thermal infrared illumination image acquiring unit", the IR illuminating unit 2 corresponds to a "thermal infrared illumination unit", the visible light image acquiring unit 3 corresponds to a "visible light image acquiring unit", the processing unit 4 corresponds to a "calculating unit" and an "adding unit", and the measuring unit 5 corresponds to a "measuring unit".
In this regard, "IR" means InfraRed.
The following description assumes the followings for ease of description and understanding.

(1) There are two persons JB1 and JB2 who need to be measured.
(2) A position of the person JB1 is closer to the temperature measuring device TMD than a position of the person JB2.
(3) A low-cost lens is used for the IR image acquiring unit 1 similarly as described in the background art.

The IR image acquiring unit 1 acquires an IR image IRG of the persons JB1 and JB2 by receiving IR light IRK. The IR image acquiring unit 1 includes an IR camera (not illustrated) that has sensitivity that comes to a peak in, for example, a mid-infrared wavelength range (3 to 5 $\mu$m) and a far-infrared wavelength range (8 to 15 $\mu$m), and a wavelength selection device (e.g., a narrow band bandpass filter whose wavelength is 10 $\mu$m).
When acquiring an IR illumination image IRSG, the IR image acquiring unit 1 selectively receives IR illumination light IRSK using the above wavelength selection device, and thereby eliminates light other than the IR illumination light IRSK such as most of the IR light IRK that is reflected by the persons JB1 and JB2 and influenced by temperatures of the persons JB1 and JB2.
The IR illuminating unit 2 radiates the IR illumination light IRSK that is infrared light (e.g., above 10 $\mu$m) in a wavelength range for which the IR image acquiring unit 1 has the sensitivity. The IR illuminating unit 2 includes, for example, a halogen lamp, a mid-infrared fiber laser, and a quantum cascade laser.
The IR illuminating unit 2 irradiates the persons JB1 and JB2 with the IR illumination light IRSK, and the IR image acquiring unit 1 acquires the IR illumination image IRSG of the persons JB1 and JB2 by receiving the IR illumination light IRSK reflected by the persons JB1 and JB2.

The visible light image acquiring unit 3 acquires a visible light image KG of the persons JB1 and JB2. The visible light image acquiring unit 3 includes, for example, a visible camera that has sensitivity whose peak comes in a visible light range.

<Visible Light Image KG>

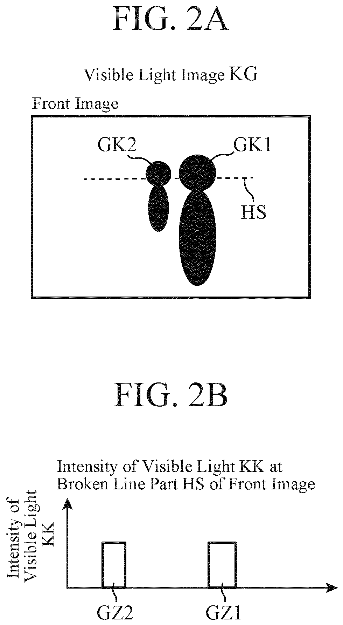

FIG. 2 illustrates the visible light image KG according to Embodiment 1.

In a front image of the visible light image KG, the person JB1 is captured larger than the person JB2 as illustrated in FIG. 2A.

As for the intensity of visible light KK on a broken line part HS in the front image illustrated in FIG. 2A, the intensity of the visible light KK to be received has a rectangular shape as illustrated in FIG. 2B, that is, there is only the visible light KK from the persons JB1 and JB2, i.e., there are only images GZ1 and GZ2 of the persons JB1 and JB2. Consequently, by scanning the intensity of the visible light KK at a plurality of the broken line parts HS (not illustrated) in the front image illustrated in FIG. 2A, it is possible to obtain outer shapes GK1 and GK2 of the persons JB1 and JB2.

<IR Image IRG>

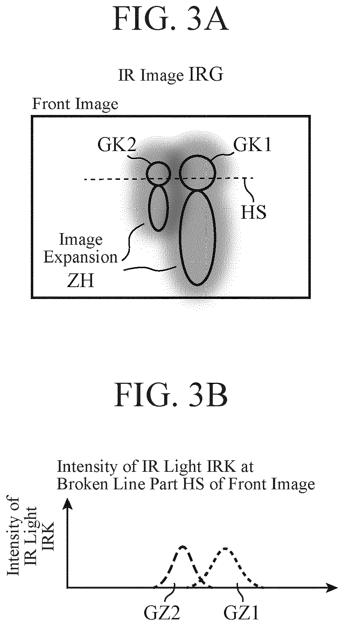

FIG. 3 illustrates the IR image IRG according to Embodiment 1.

By contrast with the front image of the visible light image KG illustrated in FIG. 2A, as illustrated in FIG. 3A, in a front image of the IR image IRG, the low-cost lens causes dispersion of luminance obtained from the IR light IRK to be received, that is, image expansion ZH occurs in the outer shapes GK1 and GK2 of the images GZ1 and GZ2 of the persons JB1 and JB2. Occurrence of the image expansion ZH becomes a factor that deteriorates accuracy of temperatures measured from the persons JB1 and JB2.

As for the intensity of the IR light IRK on the broken line part HS in the front image illustrated in FIG. 3A, by contrast with the intensity of the visible light KK illustrated in FIG. 2B, as illustrated in FIG. 3B, the intensity of the IR light IRK to be received has a shape of a collapsed rectangle and an extended skirt, in other words, the images GZ1 and GZ2 of the persons JB1 and JB2 are blurred. On the other hand, the intensity of the IR light IRK is determined according to what the temperatures of the persons JB1 and JB2 that are measurement targets are, and therefore the peak of the intensity of the IR light IRK reflected by each of the persons JB1 and JB2 is substantially the same.

<IR Illumination Image IRSG>

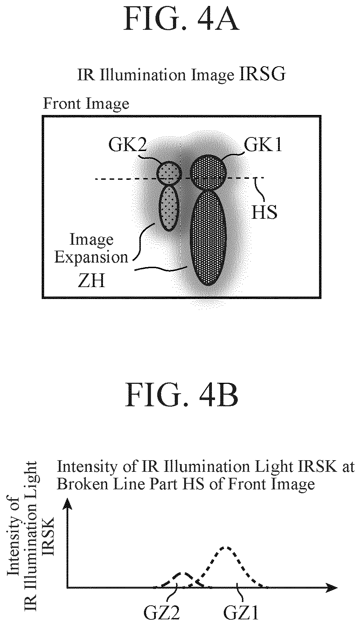

FIG. 4 illustrates the IR illumination image IRSG according to Embodiment 1.

Similar to the IR image IRG illustrated in FIGS. 3A and 3B, as illustrated in FIGS. 4A and 4B, the low-cost lens causes occurrence of the image expansion ZH in the IR illumination image IRSG, too.

On the other hand, unlike the visible light image KG illustrated in FIG. 2A and the IR image IRG illustrated in FIG. 3A, the intensity of the IR illumination light IRSK varies according to distances L1 and L2 (illustrated in FIG. 1) to the persons JB1 and JB2 in the IR illumination image IRSG. An intensity Pr of the IR illumination light IRSK is given by following equation (1).

$$\text{Pr} \propto \text{P0} \times \exp(-2\alpha\text{L}) \times \text{R}/\text{L}^2 \ldots \text{Equation (1)}$$

In this regard, P0 represents power of IR illumination light radiated by the IR illuminating unit 2, $\alpha$ represents an attenuation coefficient, R represents reflectivities of the persons JB1 and JB2, and L represents distances (corresponding to above L1 and L2) to the persons JB1 and JB2.

P0 and $\alpha$ are known, and the reflectivities R of the persons JB1 and JB2 are mutually the same. Consequently, it is possible to obtain the distances L1 and L2 to the persons JB1 and JB2 according to the above equation (1).

The power P0 of the IR illumination light IRSK radiated by the IR illuminating unit 2 is set to such a magnitude that the IR illumination light IRSK can reach the IR image acquiring unit 1 after being reflected by the persons JB1 and JB2 taking an attenuation amount during propagation of the IR illumination light IRSK into account.

Instead of eliminating the IR light IRK using the wavelength selection device, then receiving the IR illumination light IRSK, and acquiring the IR illumination image IRSG in advance as described above, for example, the IR image acquiring unit 1 may receive the IR light IRK and the IR illumination light IRSK without using the wavelength selection device, acquire the IR illumination image IRSG, then calculate a difference between the IR illumination image IRSG and the IR image IRG, and thereby eliminate an influence of the IR light IRK later.

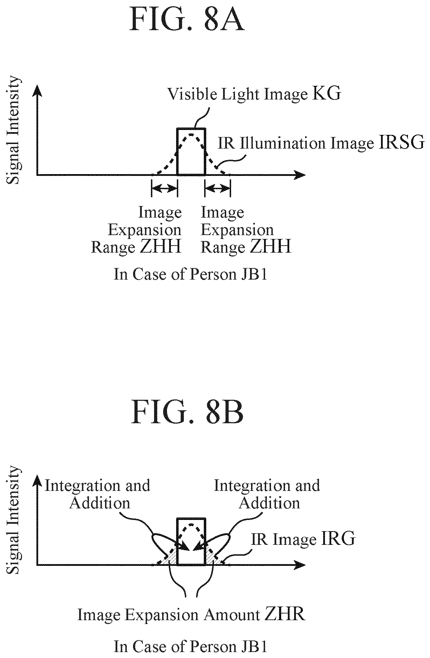

Back to FIG. 1, by comparing the outer shapes GK1 and GK2 (illustrated in FIG. 2) of the images GZ1 and GZ2 of the persons JB1 and JB2 in the visible light image KG with the outer shapes GK1 and GK2 (illustrated in FIG. 4) of the images GZ1 and GZ2 of the persons JB1 and JB2 in the IR illumination image IRSG, the processing unit 4 calculates an image expansion amount ZHR (illustrated in FIG. 8) of the persons JB1 and JB2.

The processing unit 4 adds the image expansion amount ZHR to the images GZ1 and GZ2 of the persons JB1 and JB2 in the IR image IRG (illustrated in FIG. 3).

The measuring unit 5 measures the temperatures of the persons JB1 and JB2 based on the images GZ1 and GZ2 of the persons JB1 and JB2 to which the image expansion amount ZHR has been added in the IR image IRG (illustrated in FIG. 3).

<Configuration According to Embodiment 1>

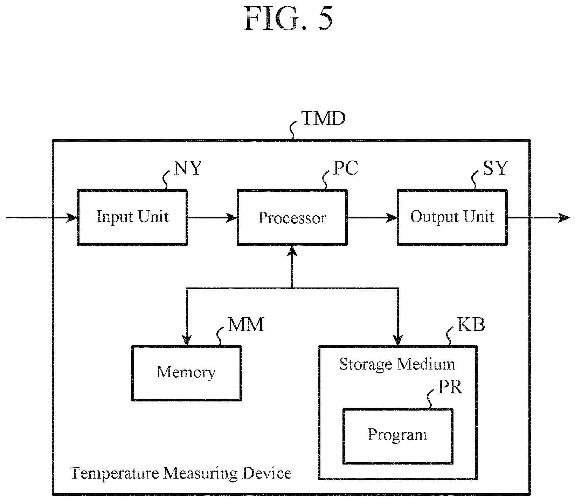

FIG. 5 illustrates a configuration of the temperature measuring device TMD according to Embodiment 1.

The temperature measuring device TMD according to Embodiment 1 includes an input unit NY, a processor PC, an output unit SY, a memory MM, and a storage medium KB as illustrated in FIG. 5 to achieve the above-described function. To be more precise, the temperature measuring device TMD according to Embodiment 1 includes the input unit NY and the output unit SY if necessary.

The input unit NY includes, for example, a camera, a microphone, a keyboard, a mouse, and a touch panel. The processor PC is a well-known core of a computer that causes hardware to operate according to software. The output unit SY includes, for example, a liquid crystal monitor, a printer, and a touch panel. The memory MM includes, for example, a Dynamic Random Access Memory (DRAM) and a Static Random Access Memory (SRAM). The storage medium KB includes, for example, a Hard Disk Drive (HDD), a Solid State Drive (SSD), and a Read Only Memory (ROM).

The storage medium KB stores a program PR. The program PR is an instruction set that defines contents of processing that the processor PC needs to execute.

As for a relationship between the function and the configuration of the temperature measuring device TMD, the processor PC executes the program PR stored in the storage medium KB on the memory MM of the hardware, control operations of the input unit NY and the output unit SY as needed, and thereby implements the function of each unit from the IR image acquiring unit 1 to the measuring unit 5.

<Operation According to Embodiment 1>

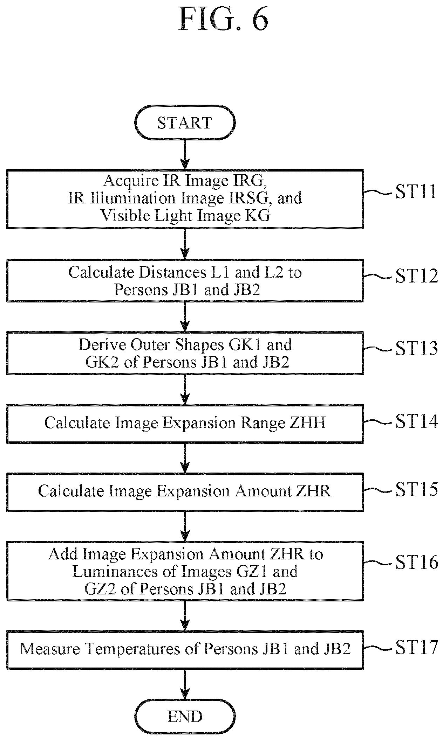

FIG. 6 is a flowchart illustrating an operation of the temperature measuring device TMD according to Embodiment 1. The operation of the temperature measuring device TMD according to Embodiment 1 will be described with reference to the flowchart in FIG. 6 below.

Step ST11: The IR image acquiring unit 1 (illustrated in FIG. 1) acquires the IR image IRG (illustrated in FIG. 3) of the persons JB1 and JB2 (illustrated in FIG. 1), and acquires the IR illumination image IRSG (illustrated in FIG. 4) of the persons JB1 and JB2 under of radiation of the IR illumination light IRSK from the IR illuminating unit 2 (illustrated in FIG. 1). The visible light image acquiring unit 3 (illustrated in FIG. 1) acquires the visible light image KG (illustrated in FIG. 2) of the persons JB1 and JB2.

Step ST12: As illustrated in FIG. 4B, the processing unit 4 (illustrated in FIG. 1) calculates the distances L1 and L2 (illustrated in FIG. 1) to the persons JB1 and JB2 from the IR illumination image IRSG using the equation (1).

Step ST13: As illustrated in FIG. 2B, the processing unit 4 derives the outer shapes GK1 and GK2 of the persons JB1 and JB2 from the visible light image KG.

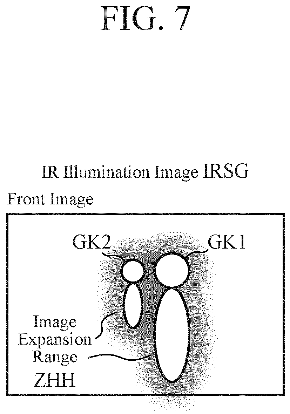

FIG. 7 illustrates a range ZHH of the image expansion ZH according to Embodiment 1.

FIG. 8 illustrates the range ZHH and the amount ZHR of the image expansion ZH according to Embodiment 1.

Step ST14: The processing unit 4 compares the IR illumination image IRSG (illustrated in FIG. 4A) with the visible light image KG (illustrated in FIG. 2A), and thereby calculates the range of the image expansion ZH (hereinafter, referred to as the "image expansion range ZHH") in the IR illumination image IRSG as illustrated in FIG. 7. As illustrated in FIG. 7, the image expansion range ZHH is a range of the images GZ1 and GZ2 of the persons JB1 and JB2 that expand toward an outer side of the outer shapes GK1 and GK2 of the persons JB1 and JB2.

Step ST15: As illustrated in FIGS. 8A and 8B, the processing unit 4 integrates luminances of the image expansion range ZHH, and thereby calculates the amount of the image expansion ZH (hereinafter, referred to as the "image expansion amount ZHR").

The image expansion ZH (illustrated in FIG. 4A) in the IR illumination image IRSG is equivalent to the image expansion ZH (illustrated in FIG. 3A) in the IR image IRG. Consequently, the image expansion range ZHH and the image expansion amount ZHR obtained on the IR illumination image IRSG are applicable as is to the IR image IRG.

Step ST16: The processing unit 4 adds the luminance of the image expansion amount ZHR to luminances of the images GZ1 and GZ2 of the persons JB1 and JB2 on the IR image IRG, and thereby corrects the luminances of the images GZ1 and GZ2 of the persons JB1 and JB2.

Step ST17: The measuring unit 5 estimates the temperatures of the persons JB1 and JB2 based on the corrected luminances of the images GZ1 and GZ2 of the persons JB1 and JB2, that is, measures the temperatures of the persons JB1 and JB2.

<Effect According to Embodiment 1>

As described above, the temperature measuring device TMD according to Embodiment 1 acquires the outer shapes GK1 and GK2 of the images GZ1 and GZ2 of the persons JB1 and JB2 from the visible light image KG, calculates the image expansion amount ZHR by comparing the IR illumination image IRSG with the visible light image KG, adds the image expansion amount ZHR to the images GZ1 and GZ2 of the persons JB1 and JB2 on the IR image IRG, and thereby corrects the luminances of the images GZ1 and GZ2 of the persons JB1 and JB2 on the IR image IRG. The temperatures of the persons JB1 and JB2 are measured based on the corrected luminances of the images GZ1 and GZ2 of the persons JB1 and JB2, that is, by taking the image expansion amount ZHR into account, so that it is possible to more accurately measure the temperatures of the persons JB1 and JB2 than the conventional technique that does not take the image expansion ZH into account at all.

The temperature measuring device TMD according to Embodiment 1 acquires the distances L1 and L2 to the persons JB1 to JB2. Consequently, in addition to the above effect, the temperature measuring device TMD according to Embodiment 1 can separate the images GZ1 and GZ2 of the persons JB1 and JB2 from each other using the above outer shapes GK1 and GK2 of the images GZ1 and GZ2 of the persons JB1 and JB2 and distances L1 and L2 to the persons JB1 and JB2.

Embodiment 2.

<Embodiment 2>

A temperature measuring device according to Embodiment 2 will be described.

<Function According to Embodiment 2>

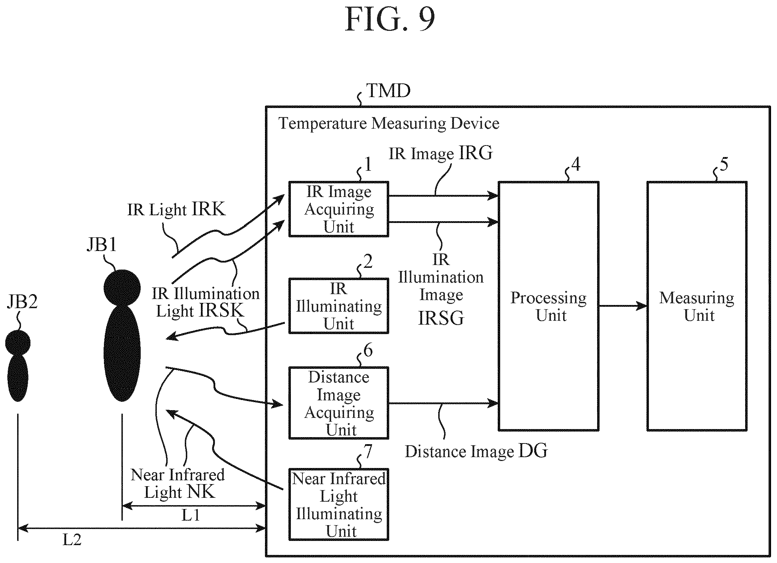

FIG. 9 is a functional block diagram of a temperature measuring device TMD according to Embodiment 2.

Similar to the temperature measuring device TMD according to Embodiment 1, as illustrated in FIG. 9, the temperature measuring device TMD according to Embodiment 2 includes an IR image acquiring unit 1, an IR illuminating unit 2, a processing unit 4, and a measuring unit 5. On the other hand, unlike the temperature measuring device TMD according to Embodiment 1, the temperature measuring device TMD according to Embodiment 2 includes a distance image acquiring unit 6 and a near infrared light illuminating unit 7 instead of the visible light image acquiring unit 3.

Functions of the IR image acquiring unit 1, the IR illuminating unit 2, the processing unit 4, and the measuring unit 5 according to Embodiment 2 are the same as the functions of the IR image acquiring unit 1, the IR illuminating unit 2, the processing unit 4, and the measuring unit 5 according to Embodiment 1.

The distance image acquiring unit 6 receives near infrared light NK, and thereby acquires an image (hereinafter, referred to as a "distance image DG") showing distances L1 and L2 to persons JB1 and JB2.

The near infrared light illuminating unit 7 irradiates targets to measure such as the persons JB1 and JB2 with the near infrared light NK (whose wavelength range is 1 to 2 $\mu$m) to enable the distance image acquiring unit 6 to acquire the distance image DG.

The distance image acquiring unit 6 and the near infrared light illuminating unit 7 adopt, for example, Light Detection and Ranging (LiDAR). The distance image acquiring unit 6 and the near infrared light illuminating unit 7 may use, for example, visible light or ultraviolet light instead of the above near infrared light NK.

The distance image acquiring unit 6 corresponds to a "distance image acquiring unit", the near infrared light illuminating unit 7 corresponds to a "distance measurement illuminating unit", and the near infrared light NK corresponds to "distance measurement illumination light".

The processing unit 4 corresponds to a "first acquiring unit" and a "second acquiring unit" in addition to the correspondence in Embodiment 1.

<Distance Image DG According to Embodiment 2>

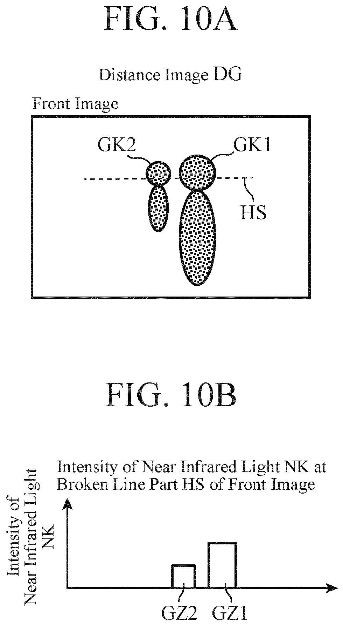

FIG. 10 illustrates the distance image DG according to Embodiment 2.

Similar to the visible light image KG (illustrated in 2A), as illustrated in FIG. 10A, a front image of the distance image DG shows outer shapes GK1 and GK2 of images GZ1 and GZ2 of the persons JB1 and JB2.

Similar to the IR illumination image IRSG (illustrated in FIG. 4B), as suggested in FIG. 10B, distances L1 and L2 to the persons JB1 and JB2 are obtained according to the intensity of the near infrared light NK in the distance image DG.

<Configuration According to Embodiment 2>

A configuration of the temperature measuring device TMD according to Embodiment 2 is the same as the configuration (illustrated in FIG. 5) of the temperature measuring device TMD according to Embodiment 1.

<Operation According to Embodiment 2>

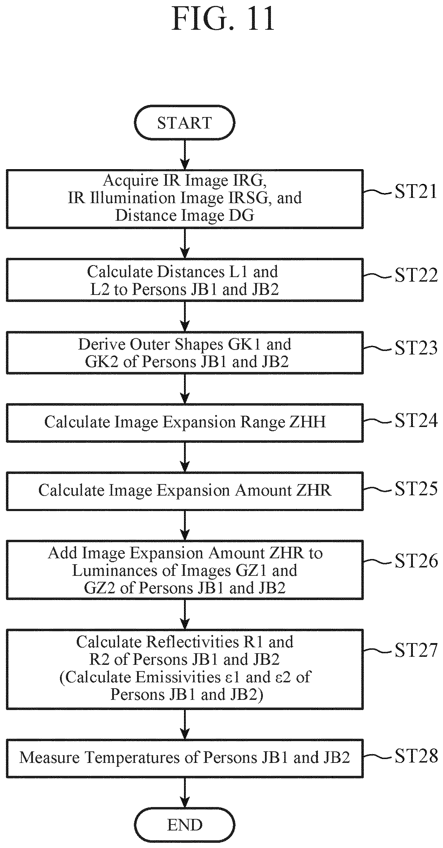

FIG. 11 is a flowchart illustrating an operation of the temperature measuring device TMD according to Embodiment 2. The operation of the temperature measuring device TMD according to Embodiment 2 will be described with reference to the flowchart in FIG. 11 below.

Step ST21: Similar to step ST11 in Embodiment 1, the IR image acquiring unit 1 acquires the IR image IRG (illustrated in FIG. 3) of the persons JB1 and JB2, and acquires the IR illumination image IRSG (illustrated in FIG. 4) of the persons JB1 and JB2 under radiation of IR illumination light IRSK from the IR illuminating unit 2. On the other hand, unlike step ST11 in Embodiment 1, the distance image acquiring unit 6 acquires the distance image DG (illustrated in FIG. 10) of the persons JB1 and JB2.

Step ST22: Unlike step ST12 in Embodiment 1, as illustrated in FIG. 10B, the processing unit 4 acquires the distances L1 and L2 to the persons JB1 and JB2 from the distance image DG using the equation (1).

Step ST23: Unlike step ST13 in Embodiment 1, as illustrated in FIG. 10A, the processing unit 4 derives the outer shapes GK1 and GK2 of the images GZ1 and GZ2 of the persons JB1 and JB2 from the distance image DG.

Step ST24: Unlike step ST14 in Embodiment 1, the processing unit 4 compares the IR illumination image IRSG (illustrated in FIG. 4A) with the distance image DG (illustrated in FIG. 10A), and thereby calculates an image expansion range ZHH.

Step ST25: Similar to step ST15 in Embodiment 1, the processing unit 4 calculates the image expansion amount ZHR.

Step ST26: Similar to step ST16 in Embodiment 1, the processing unit 4 corrects luminances of the images GZ1 and GZ2 of the persons JB1 and JB2.

Step ST27: Since power P0 of the IR illumination light IRSK, the distances L1 and L2, and an intensity Pr of the IR illumination image IRSG are known, the processing unit 4 calculates, that is, acquires reflectivities R1 and R2 of the persons JB 1 and JB2, respectively, according to the above equation (1).

When transmittance is 0, the following equation (2) holds according to the Kirchhoff's Law.

$$\text{Emissivity } \varepsilon + \text{Reflectivity } R = 1 \ \dots \ \text{Equation (2)}$$

Hence, calculating the above reflectivities R1 and R2 of the persons JB1 and JB1 is the same as deriving emissivities $\varepsilon 1$ and $\varepsilon 2$ of the persons JB1 and JB2. The size of the IR light IRK received by the IR image acquiring unit 1 is proportional to the emissivities $\varepsilon 1$ and $\varepsilon 2$.

Step ST28: The measuring unit 5 estimates the temperatures of the persons JB1 and JB2 based on the corrected luminances of the images GZ1 and GZ2 of the persons JB1 and JB2 similar to step ST17 in Embodiment 1 by taking the emissivities $\varepsilon 1$ and $\varepsilon 2$ of the persons JB1 and JB2 into account unlike step ST17 in Embodiment 1, that is, measures the temperatures of the persons JB1 and JB2.

As described above, in the temperature measuring device TMD according to Embodiment 2, the distance image acquiring unit 6 acquires the distance image DG, and thereby acquires the reflectivities R1 and R2 of the persons JB1 and JB2, in other words, acquires the emissivities $\varepsilon 1$ and $\varepsilon 2$ of the persons JB1 and JB2. Thus, unlike Embodiment 1 where only the image expansion amount ZHR is taken into account, the temperatures of the persons JB1 and JB2 are measured by taking the emissivities $\varepsilon 1$ and $\varepsilon 2$ into account in addition to an image expansion amount ZHR. As a result, it is possible to more accurately measure the temperatures of the persons JB1 and JB2 than the temperature measuring device TMD according to Embodiment 1.

Embodiment 3.

<Embodiment 3>

A temperature measuring device according to Embodiment 3 will be described.

<Function According to Embodiment 3>

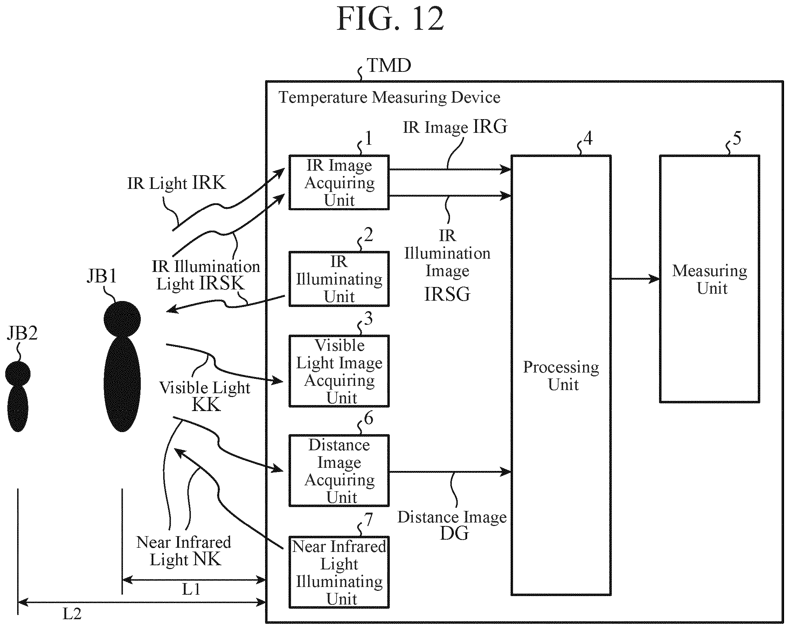

FIG. 12 is a functional block diagram of a temperature measuring device TMD according to Embodiment 3.

As illustrated in FIG. 12, the temperature measuring device TMD according to Embodiment 3 is a combination of the temperature measuring device TMD (illustrated in FIG. 1) according to Embodiment 1 and the temperature measuring device TMD (illustrated in FIG. 9) according to Embodiment 2. More specifically, the temperature measuring device TMD according to Embodiment 3 includes an IR image acquiring unit 1, an IR illuminating unit 2, a processing unit 4, and a measuring unit 5 similar to the temperature measuring device TMD according to Embodiment 1 and the temperature measuring device TMD according to Embodiment 2. The temperature measuring device TMD according to Embodiment 3 includes a visible light image acquiring unit 3 similar to the temperature measuring device TMD according to Embodiment 1, and includes a distance image acquiring unit 6 and a near infrared light illuminating unit 7 similar to the temperature measuring device TMD according to Embodiment 2.

The functions of the IR image acquiring unit 1, the IR illuminating unit 2, the visible light image acquiring unit 3, the processing unit 4, the measuring unit 5, the distance image acquiring unit 6, and the near infrared light illuminating unit 7 according to Embodiment 3 are the same as the functions of the IR image acquiring unit 1, the IR illuminating unit 2, the visible light image acquiring unit 3, the processing unit 4, the measuring unit 5, the distance image acquiring unit 6, and the near infrared light illuminating unit 7 according to Embodiments 1 and 2.

<Configuration According to Embodiment 3>

The configuration of the temperature measuring device TMD according to Embodiment 3 is the same as the configuration (illustrated in FIG. 5) of the temperature measuring device TMD according to Embodiment 1.

<Operation According to Embodiment 3>

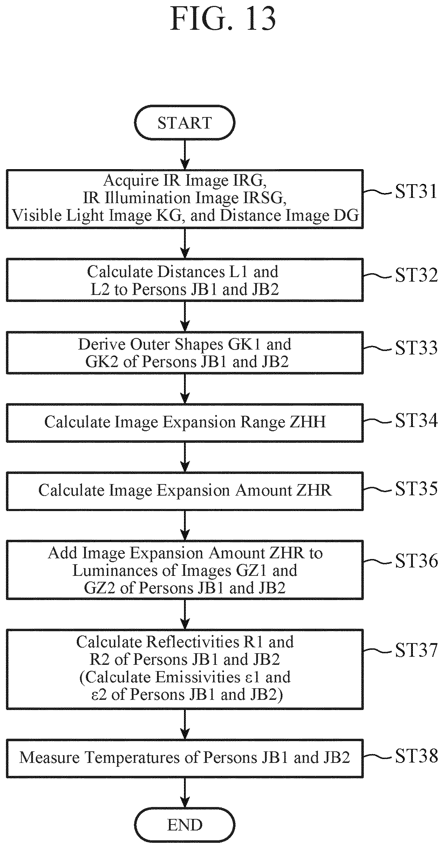

FIG. 13 is a flowchart illustrating an operation of the temperature measuring device TMD according to Embodiment 3. The operation of the temperature measuring device TMD according to Embodiment 3 will be described with reference to the flowchart in FIG. 13 below.

Steps ST31 to ST36: Similar to steps ST11 to ST16 in Embodiment 1 and steps ST21 to ST26 in Embodiment 2, the processing unit 4 acquires distances L1 and L2 to persons JB1 and JB2, outer shapes GK1 and GK2, an image expansion range ZHH, and an image expansion amount ZHR, and corrects luminances of images GZ1 and GZ2 of the persons JB1 and JB2.

Step ST37: Similar to step ST27 in Embodiment 2, the processing unit 4 calculates reflectivities R1 and R2 of the persons JB1 and JB1, that is, calculates emissivities $\varepsilon$1 and $\varepsilon$2 of the persons JB1 and JB2.

Step ST38: Similar to step ST17 in Embodiment 1 and step ST28 in Embodiment 2, the measuring unit 5 measures the temperatures of the persons JB1 and JB2.

<Effect According to Embodiment 3>

As described above, the temperature measuring device TMD according to Embodiment 3 employs the configuration obtained by combining the temperature measuring device TMD according to Embodiment 1 and the temperature measuring device TMD according to Embodiment 2, and consequently can obtain the effect of the temperature measuring device TMD according to Embodiment 1 and the effect of the temperature measuring device TMD according to Embodiment 2.

The temperature measuring device TMD according to Embodiment 3 uses a distance image DG obtained by the distance image acquiring unit 6 and consequently can improve robustness against environment where temperatures are measured in addition to the above effects even under, for example, environment in which a flare, a ghost, and the like appear in a visible camera included in the visible light image acquiring unit 3, and even under dim environment,.

INDUSTRIAL APPLICABILITY

The temperature measuring device according to the present disclosure can be used to measure, for example, temperatures of persons.

REFERENCE SIGNS LIST

1: IR image acquiring unit, 2: IR illuminating unit, 3: visible light image acquiring unit, 4: processing unit, 5: measuring unit, 6: distance image acquiring unit, 7: near infrared light illuminating unit, DG: distance image, GK1: outer shape, GK2: outer shape, GZ1: image, GZ2: image, HS: broken line portion, IRG: IR image, IRG: IR image, IRK: IR light, IRSG: IR illumination image, IRSK: IR illumination light, JB1: person, JB2: person, KB: storage medium, KG: visible light image, KK: visible light, L1: distance, L2: distance, MM: memory, NK: near infrared light, NY: input unit, P0: power, PC:

processor, Pr: intensity, PR: program, R: reflectivity, R1: reflectivity, R2: reflectivity, SY: output unit, TMD: temperature measuring device, ZH: image expansion, ZHH: image expansion range, ZHR: image expansion amount, $\varepsilon1$: emissivity, $\varepsilon2$: emissivity

**Claims**

1.  A temperature measuring device comprising:

    a thermal infrared illuminating unit (2) configured to irradiate with thermal infrared light a target whose temperature needs to be measured;
    a thermal infrared illumination image acquiring unit (1) configured to acquire, by an infrared camera, a thermal infrared illumination image including an image of the target irradiated with the thermal infrared light;
    a thermal infrared image acquiring unit (1) configured to acquire, by the infrared camera, a thermal infrared image including the image of the target;
    a visible light image acquiring unit (3) configured to acquire a visible light image including the image of the target;
    a calculating unit (4) configured to calculate an image expansion range of the image of the target based on the image of the target in the acquired visible light image and the image of the target in the acquired IR illumination image by comparing the thermal infrared illumination image with the visible light image, the image expansion occurring in the outer shapes of the thermal infrared image of the target, and to calculate an image expansion amount by integrating luminances in the image expansion range of the thermal infrared image;
    an adding unit (4) configured to add the calculated image expansion amount in the acquired thermal infrared image to luminance of the thermal infrared image of the target; and
    a measuring unit (5) configured to measure a temperature of the target based on the thermal infrared image of the target to which the image expansion amount has been added.

2.  A temperature measuring device comprising:

    a thermal infrared illuminating unit (2) configured to irradiate with thermal infrared light a target whose temperature needs to be measured;
    a thermal infrared illumination image acquiring unit (1) configured to acquire, by an infrared camera, a thermal infrared illumination image including an image of the target irradiated with the thermal infrared light;
    a thermal infrared image acquiring unit (1) configured to acquire, by the infrared camera, a thermal infrared image including the image of the target;
    a distance measurement illuminating unit (7) configured to irradiate the target with distance measurement illumination light for measuring a distance;
    a distance image acquiring unit (6) configured to acquire a distance image including the image of the target irradiated with the distance measurement illumination light;
    a calculating unit (4) configured to calculate an image expansion range of the image of the target based on the image of the target in the acquired distance image and the image of the target in the acquired thermal infrared illumination image by comparing the thermal infrared illumination image with the distance image, the image expansion occurring in the outer shapes of the thermal infrared image of the target, and to calculate an image expansion amount by integrating luminances in the image expansion range of the thermal infrared image;
    an adding unit (4) configured to add the calculated image expansion amount in the acquired thermal infrared image to luminance of the thermal infrared image of the target;
    a first acquiring unit (4) configured to acquire a distance to the target based on the acquired distance image;
    a second acquiring unit (4) configured to acquire emissivity of the target based on the acquired distance; and
    a measuring unit (5) configured to measure a temperature of the target based on the thermal infrared image of the target to which the image expansion amount has been added, and the acquired emissivity of the target.

3.  A temperature measuring device comprising:

    a thermal infrared illuminating unit (2) configured to irradiate with thermal infrared light a target whose temperature needs to be measured;
    a thermal infrared illumination image acquiring unit (1) configured to acquire, by an infrared camera, a thermal infrared illumination image including an image of the target irradiated with the thermal infrared light;
    a thermal infrared image acquiring unit (1) configured to acquire, by the infrared camera, a thermal infrared image including the image of the target;

a visible light image acquiring unit (3) configured to acquire a visible light image including the image of the target;

a distance measurement illuminating unit (7) configured to irradiate the target with distance measurement illumination light for measuring a distance;

a distance image acquiring unit (6) configured to acquire a distance image including the image of the target irradiated with the distance measurement illumination light;

a calculating unit (4) configured to calculate an image expansion range of the image of the target based on one of the image of the target in the acquired visible light image and the image of the target in the acquired distance image, and the image of the target in the acquired thermal infrared illumination image by comparing the thermal infrared illumination image with the visible light image or the distance image, the image expansion occurring in the outer shapes of the thermal infrared image of the target, and to calculate an image expansion amount by integrating luminances in the image expansion range of the thermal infrared image;

an adding unit (4) configured to add the calculated image expansion amount in the thermal infrared image to luminance of the thermal infrared image of the target;

a first acquiring unit (4) configured to acquire a distance to the target based on the acquired distance image;

a second acquiring unit (4) configured to acquire emissivity of the target based on the acquired distance; and

a measuring unit (5) configured measure a temperature of the target based on the thermal infrared image of the target to which the image expansion amount has been added, and the calculated emissivity of the target.

4.  A temperature measuring method comprising:

by a thermal infrared illuminating unit (2), irradiating with thermal infrared light a target whose temperature needs to be measured;

by a thermal infrared illumination image acquiring unit (1), acquiring, by an infrared camera, a thermal infrared illumination image including an image of the target irradiated with the thermal infrared light;

by a thermal infrared image acquiring unit (1), acquiring, by the infrared camera, a thermal infrared image including the image of the target;

by a visible light image acquiring unit (3), acquiring a visible light image including the image of the target;

by a calculating unit (4), calculating an image expansion range of the image of the target based on the image of the target in the acquired visible light image and the image of the target in the acquired IR illumination image by comparing the thermal infrared illumination image with the visible light image, the image expansion occurring in the outer shapes of the thermal infrared image of the target, and to calculate an image expansion amount by integrating luminances in the image expansion range of the thermal infrared image;

by an adding unit (4), adding the calculated image expansion amount in the acquired thermal infrared image to luminance of the thermal infrared image of the target; and

by a measuring unit (5), measuring a temperature of the thermal infrared target based on the image of the target to which the image expansion amount has been added.

5.  A temperature measuring method comprising:

by a thermal infrared illuminating unit (2), irradiating with thermal infrared light a target whose temperature needs to be measured;

by a thermal infrared illumination image acquiring unit (1), acquiring, by an infrared camera, a thermal infrared illumination image including an image of the target irradiated with the thermal infrared light;

by a thermal infrared image acquiring unit (1), acquiring, by the infrared camera, a thermal infrared image including the image of the target;

by a distance measurement illuminating unit, irradiating the target with distance measurement illumination light for measuring a distance;

by a distance image acquiring unit (6), acquiring a distance image including the image of the target irradiated with the distance measurement illumination light;

by a calculating unit (4), calculating an image expansion range of the image of the target based on the image of the target in the acquired distance image and the image of the target in the acquired thermal infrared illumination image by comparing the thermal infrared illumination image with the distance image, the image expansion occurring in the outer shapes of the thermal infrared image of the target, and to calculate an image expansion amount by integrating luminances in the image expansion range of the thermal infrared image;

by an adding unit (4), adding the calculated image expansion amount in the acquired thermal infrared image to luminance of the thermal infrared image of the target;

by a first acquiring unit (4), acquiring a distance to the target based on the acquired distance image;

by a second acquiring unit (4), acquiring emissivity of the target based on the acquired distance; and

by a measuring unit (5), measuring a temperature of the thermal infrared target based on the image of the target to which the image expansion amount has been added, and the acquired emissivity of the target.

**6.** A temperature measuring method comprising:

by a thermal infrared illuminating unit (2), irradiating with thermal infrared light a target whose temperature needs to be measured;
by a thermal infrared illumination image acquiring unit (1), acquiring, by an infrared camera, a thermal infrared illumination image including an image of the target irradiated with the thermal infrared light;
by a thermal infrared image acquiring unit (1), acquiring, by the infrared camera, a thermal infrared image including the image of the target;
by a visible light image acquiring unit (3), acquiring a visible light image including the image of the target;
by a distance measurement illuminating unit (7), irradiating the target with distance measurement illumination light for measuring a distance;
by a distance image acquiring unit (6), acquiring a distance image including the image of the target irradiated with the distance measurement illumination light;
by a calculating unit (4), calculating an image expansion range of the image of the target based on one of the image of the target in the acquired visible light image and the image of the target in the acquired distance image, and the image of the target in the acquired thermal infrared illumination image by comparing the thermal infrared illumination image with the visible light image or the distance image, the image expansion occurring in the outer shapes of the thermal infrared image of the target, and to calculate an image expansion amount by integrating luminances in the image expansion range of the thermal infrared image;
by an adding unit (4), adding the calculated image expansion amount in the thermal infrared image to luminance of the thermal infrared image of the target;
by a first acquiring unit (4), acquiring a distance to the target based on the acquired distance image;
by a second acquiring unit (4), acquiring emissivity of the target based on the acquired distance; and
by a measuring unit (5), measure a temperature of the thermal infrared target based on the image of the target to which the image expansion amount has been added, and the calculated emissivity of the target.

**Patentansprüche**

**1.** Temperaturmesseinrichtung, umfassend:

eine Wärme-Infrarot-Beleuchtungseinheit (2), die eingerichtet ist, ein Ziel, dessen Temperatur gemessen werden muss, mit Wärme-Infrarot-Licht zu bestrahlen;
eine Wärme-Infrarot-Beleuchtungsbild-Beschaffungseinheit (1), die eingerichtet ist, durch eine Infrarotkamera ein Wärme-Infrarot-Beleuchtungsbild zu beschaffen, das ein Bild des mit dem Wärme-Infrarot-Licht bestrahlten Ziels aufweist;
eine Wärme-Infrarot-Bild-Beschaffungseinheit (1), die eingerichtet ist, durch die Infrarotkamera ein Wärme-Infrarot-Bild zu beschaffen, das das Bild des Ziels aufweist;
eine Sichtbares-Licht-Beschaffungseinheit (3), die eingerichtet ist, ein Sichtbares-Licht-Bild zu beschaffen, das das Bild des Ziels aufweist;
eine Berechnungseinheit (4), die eingerichtet ist, einen Expansionsbereich des Bildes des Ziels auf der Grundlage des Bildes des Ziels in dem beschafften Sichtbares-Licht-Bild und des Bildes des Ziels in dem beschafften IR-Beleuchtungsbild zu berechnen, indem das Wärme-Infrarot-Beleuchtungsbild mit dem Sichtbares-Licht-Bild verglichen wird, wobei die Bildexpansion in den äußeren Formen des Wärme-Infrarot-Bildes des Ziels auftritt, um einen Bildexpansionsumfang zu berechnen, indem Leuchtdichten in dem Bildexpansionsbereich des Wärme-Infrarot-Bildes integriert werden;
eine Hinzufügungseinheit (4), die eingerichtet ist, den berechneten Bildexpansionsumfang in dem beschafften Wärme-Infrarot-Bild zur Leuchtdichte des Wärme-Infrarot-Bildes des Ziels hinzuzufügen; und
eine Messeinheit (5), die eingerichtet ist, eine Temperatur des Ziels auf der Grundlage des Wärme-Infrarot-Bildes des Ziels zu messen, zu dem der Bildexpansionsumfang hinzugefügt wurde.

**2.** Temperaturmesseinrichtung, umfassend:

eine Wärme-Infrarot-Beleuchtungseinheit (2), die eingerichtet ist, ein Ziel, dessen Temperatur gemessen werden muss, mit Wärme-Infrarot-Licht zu bestrahlen;

eine Wärme-Infrarot-Beleuchtungsbild-Beschaffungseinheit (1), die eingerichtet ist, durch eine Infrarotkamera ein Wärme-Infrarot-Beleuchtungsbild zu beschaffen, das ein Bild des mit dem Wärme-Infrarot-Licht bestrahlten Ziels aufweist;

eine Wärme-Infrarot-Bild-Beschaffungseinheit (1), die eingerichtet ist, durch die Infrarotkamera ein Wärme-Infrarot-Bild zu beschaffen, das das Bild des Ziels aufweist;

eine Entfernungsmessung-Beleuchtungseinheit (7), die eingerichtet ist, das Ziel mit Entfernungsmessung-Beleuchtungslicht zu bestrahlen, um eine Entfernung zu messen;

eine Entfernungsbild-Beschaffungseinheit (6), die eingerichtet ist, ein Entfernungsbild zu beschaffen, das das Bild des mit dem Entfernungsmessung-Beleuchtungslicht bestrahlten Ziels aufweist;

eine Berechnungseinheit (4), die eingerichtet ist, einen Bildexpansionsbereich des Bildes des Ziels auf der Grundlage des Bildes des Ziels in dem beschafften Entfernungsbild und des Bildes des Ziels in dem beschafften Wärme-Infrarot-Beleuchtungsbild zu berechnen, indem das Wärme-Infrarot-Beleuchtungsbild mit dem Entfernungsbild verglichen wird, wobei die Bildexpansion in den äußeren Formen des Wärme-Infrarot-Bildes des Ziels auftritt, und um einen Bildexpansionsumfang zu berechnen, indem Leuchtdichten in dem Bildexpansionsbereich des Wärme-Infrarot-Bildes integriert werden;

eine Hinzufügungseinheit (4), die eingerichtet ist, den berechneten Bildexpansionsumfang in dem beschafften Wärme-Infrarot-Bild zur Leuchtdichte des Wärme-Infrarot-Bildes des Ziels hinzuzufügen;

eine erste Beschaffungseinheit (4), die eingerichtet ist, auf Grundlage des beschafften Entfernungsbildes eine Entfernung zum Ziel zu beschaffen;

eine zweite Beschaffungseinheit (4), die eingerichtet ist, auf Grundlage der beschafften Entfernung ein Emissionsvermögen des Ziels zu beschaffen; und

eine Messeinheit (5), die eingerichtet ist, eine Temperatur des Ziels auf der Grundlage des Wärme-Infrarot-Bildes des Ziels, zu dem der Bildexpansionsumfang hinzugefügt wurde, und des beschafften Emissionsvermögen des Ziels zu messen.

3. Temperaturmesseinrichtung, umfassend:

eine Wärme-Infrarot-Beleuchtungseinheit (2), die eingerichtet ist, ein Ziel, dessen Temperatur gemessen werden muss, mit Wärme-Infrarot-Licht zu bestrahlen;

eine Wärme-Infrarot-Beleuchtungsbild-Beschaffungseinheit (1), die eingerichtet ist, durch eine Infrarotkamera ein Wärme-Infrarot-Beleuchtungsbild zu beschaffen, das ein Bild des mit dem Wärme-Infrarot-Licht bestrahlten Ziels aufweist;

eine Wärme-Infrarot-Bild-Beschaffungseinheit (1), die eingerichtet ist, durch die Infrarotkamera ein Wärme-Infrarot-Bild zu beschaffen, das das Bild des Ziels aufweist;

eine Sichtbares-Licht-Beschaffungseinheit (3), die eingerichtet ist, ein Sichtbares-Licht-Bild zu beschaffen, das das Bild des Ziels aufweist;

eine Entfernungsmessung-Beleuchtungseinheit (7), die eingerichtet ist, das Ziel mit Entfernungsmessung-Beleuchtungslicht zu bestrahlen, um eine Entfernung zu messen;

eine Entfernungsbild-Beschaffungseinheit (6), die eingerichtet ist, ein Entfernungsbild zu beschaffen, das das Bild des mit dem Entfernungsmessung-Beleuchtungslicht bestrahlten Ziels aufweist;

eine Berechnungseinheit (4), die eingerichtet ist, einen Bildexpansionsbereich des Bildes des Ziels auf der Grundlage eines des Bildes des Ziels in dem beschafften Sichtbares-Licht-Bild und des Bildes des Ziels in dem beschafften Entfernungsbild und des Bildes des Ziels in dem beschafften Wärme-Infrarot-Beleuchtungsbild zu berechnen, indem das Wärme-Infrarot-Beleuchtungsbild mit dem Sichtbares-Licht-Bild oder dem Entfernungsbild verglichen wird, wobei die Bildexpansion in den äußeren Formen des Wärme-Infrarot-Bildes des Ziels auftritt, und um einen Bildexpansionsumfang zu berechnen, indem Leuchtdichten in dem Bildexpansionsbereich des Wärme-Infrarot-Bildes integriert werden;

eine Hinzufügungseinheit (4), die eingerichtet ist, den berechneten Bildexpansionsumfang in dem Wärme-Infrarot-Bild zur Leuchtdichte des Wärme-Infrarot-Bildes des Ziels hinzuzufügen;

eine erste Beschaffungseinheit (4), die eingerichtet ist, auf Grundlage des beschafften Entfernungsbildes eine Entfernung zum Ziel zu beschaffen;

eine zweite Beschaffungseinheit (4), die eingerichtet ist, auf Grundlage der beschafften Entfernung ein Emissionsvermögen des Ziels zu beschaffen; und

eine Messeinheit (5), die eingerichtet ist, eine Temperatur des Ziels auf der Grundlage des Wärme-Infrarot-Bildes des Ziels, zu dem der Bildexpansionsumfang hinzugefügt wurde, und des berechneten Emissionsvermögen des Ziels zu messen.

4. Temperaturmessverfahren, umfassend:

durch eine Wärme-Infrarot-Beleuchtungseinheit (2), Bestrahlen eines Ziels, dessen Temperatur gemessen werden muss, mit Wärme-Infrarot-Licht;

durch eine Wärme-Infrarot-Beleuchtungsbild-Beschaffungseinheit (1), Beschaffen, durch eine Infrarotkamera, eines Wärme-Infrarot-Beleuchtungsbildes, das ein Bild des mit dem Wärme-Infrarot-Licht bestrahlten Ziels aufweist;

durch eine Wärme-Infrarot-Bild-Beschaffungseinheit (1), Beschaffen, durch die Infrarotkamera eines Wärme-Infrarot-Bildes, das das Bild des Ziels aufweist;

durch eine Sichtbares-Licht-Beschaffungseinheit (3), Beschaffen eines Sichtbares-Licht-Bildes, das das Bild des Ziels aufweist;

durch eine Berechnungseinheit (4), Berechnen eines Bildexpansionsbereichs des Bildes des Ziels auf der Grundlage des Bildes des Ziels in dem beschafften Sichtbares-Licht-Bild und des Bildes des Ziels in dem beschafften IR-Beleuchtungsbild, indem das Wärme-Infrarot-Beleuchtungsbild mit dem Sichtbares-Licht-Bild verglichen wird, wobei die Bildexpansion in den äußeren Formen des Wärme-Infrarot-Bildes des Ziels auftritt, und um einen Bildexpansionsumfang zu berechnen, indem Leuchtdichten in dem Bildexpansionsbereich des Wärme-Infrarot-Bildes integriert werden;

durch eine Hinzufügungseinheit (4), Hinzufügen des berechneten Bildexpansionsumfangs in dem beschafften Wärme-Infrarot-Bild zur Leuchtdichte des Wärme-Infrarot-Bildes des Ziels; und

durch eine Messeinheit (5), Messen einer Temperatur des Wärme-Infrarot-Ziels auf der Grundlage des Bildes des Ziels, zu dem der Bildexpansionsumfang hinzugefügt wurde.

5. Temperaturmessverfahren, umfassend:

durch eine Wärme-Infrarot-Beleuchtungseinheit (2), Bestrahlen eines Ziels, dessen Temperatur gemessen werden muss, mit Wärme-Infrarot-Licht;

durch eine Wärme-Infrarot-Beleuchtungsbild-Beschaffungseinheit (1), Beschaffen, durch eine Infrarotkamera, eines Wärme-Infrarot-Beleuchtungsbildes, das ein Bild des mit dem Wärme-Infrarot-Licht bestrahlten Ziels aufweist;

durch eine Wärme-Infrarot-Bild-Beschaffungseinheit (1), Beschaffen, durch die Infrarotkamera eines Wärme-Infrarot-Bildes, das das Bild des Ziels aufweist;

durch eine Entfernungsmessung-Beleuchtungseinheit, Bestrahlen des Ziels mit Entfernungsmessung-Beleuchtungslicht, um eine Entfernung zu messen;

durch eine Entfernungsbild-Beschaffungseinheit (6), Beschaffen eines Entfernungsbildes, das das Bild des mit dem Entfernungsmessung-Beleuchtungslicht bestrahlten Ziels aufweist;

durch eine Berechnungseinheit (4), Berechnen eines Bildexpansionsbereichs des Bildes des Ziels auf der Grundlage des Bildes des Ziels in dem beschafften Entfernungsbild und des Bildes des Ziels in dem beschafften Wärme-Infrarot-Beleuchtungsbild, indem das Wärme-Infrarot-Beleuchtungsbild mit dem Entfernungsbild verglichen wird, wobei die Bildexpansion in den äußeren Formen des Wärme-Infrarot-Bildes des Ziels auftritt, und um einen Bildexpansionsumfang zu berechnen, indem Leuchtdichten in dem Bildexpansionsbereich des Wärme-Infrarot-Bildes integriert werden;

durch eine Hinzufügungseinheit (4), Hinzufügen des berechneten Bildexpansionsumfangs in dem beschafften Wärme-Infrarot-Bild zur Leuchtdichte des Wärme-Infrarot-Bildes des Ziels;

durch eine erste Beschaffungseinheit (4), Beschaffen, auf Grundlage des beschafften Entfernungsbildes, einer Entfernung zum Ziel;

durch eine zweite Beschaffungseinheit (4), Beschaffen, auf Grundlage der beschafften Entfernung, eines Emissionsvermögens des Ziels; und

durch eine Messeinheit (5), Messen einer Temperatur des Wärme-Infrarot-Ziels auf der Grundlage des Bildes des Ziels, zu dem der Bildexpansionsumfang hinzugefügt wurde, und des beschafften Emissionsvermögens des Ziels.

6. Temperaturmessverfahren, umfassend:

durch eine Wärme-Infrarot-Beleuchtungseinheit (2), Bestrahlen eines Ziels, dessen Temperatur gemessen werden muss, mit Wärme-Infrarot-Licht;

durch eine Wärme-Infrarot-Beleuchtungsbild-Beschaffungseinheit (1), Beschaffen, durch eine Infrarotkamera, eines Wärme-Infrarot-Beleuchtungsbildes, das ein Bild des mit dem Wärme-Infrarot-Licht bestrahlten Ziels aufweist;

durch eine Wärme-Infrarot-Bild-Beschaffungseinheit (1), Beschaffen, durch die Infrarotkamera eines Wärme-Infrarot-Bildes, das das Bild des Ziels aufweist;

durch eine Sichtbares-Licht-Beschaffungseinheit (3), Beschaffen eines Sichtbares-Licht-Bildes, das das Bild des Ziels aufweist;

durch eine Entfernungsmessung-Beleuchtungseinheit (7), Bestrahlen des Ziels mit Entfernungsmessung-Beleuchtungslicht, um eine Entfernung zu messen;

durch eine Entfernungsbild-Beschaffungseinheit (6), Beschaffen eines Entfernungsbildes, das das Bild des mit dem Entfernungsmessung-Beleuchtungslicht bestrahlten Ziels aufweist;

durch eine Berechnungseinheit (4), Berechnen eines Bildexpansionsbereichs des Bildes des Ziels auf der Grundlage eines des Bildes des Ziels in dem beschafften Sichtbares-Licht-Bild und des Bildes des Ziels in dem beschafften Entfernungsbild und des Bildes des Ziels in dem beschafften Wärme-Infrarot-Beleuchtungsbild, indem das Wärme-Infrarot-Beleuchtungsbild mit dem Sichtbares-Licht-Bild oder dem Entfernungsbild verglichen wird, wobei die Bildexpansion in den äußeren Formen des Wärme-Infrarot-Bildes des Ziels auftritt, und um einen Bildexpansionsumfang zu berechnen, indem Leuchtdichten in dem Bildexpansionsbereich des Wärme-Infrarot-Bildes integriert werden;

durch eine Hinzufügungseinheit (4), Hinzufügen des berechneten Bildexpansionsumfangs in dem Wärme-Infrarot-Bild zur Leuchtdichte des Wärme-Infrarot-Bildes des Ziels;

durch eine erste Beschaffungseinheit (4), Beschaffen, auf Grundlage des beschafften Entfernungsbildes, einer Entfernung zum Ziel;

durch eine zweite Beschaffungseinheit (4), Beschaffen, auf Grundlage der beschafften Entfernung, eines Emissionsvermögens des Ziels; und

durch eine Messeinheit (5), Messen einer Temperatur des Wärme-Infrarot-Ziels auf der Grundlage des Bildes des Ziels, zu dem der Bildexpansionsumfang hinzugefügt wurde, und des berechneten Emissionsvermögens des Ziels.

## Revendications

1. Dispositif de mesure de température, comprenant :

   une unité d'éclairage d'infrarouge thermique (2) configurée pour irradier avec une lumière infrarouge thermique une cible dont la température doit être mesurée ;
   une unité d'acquisition d'image par éclairage infrarouge thermique (1) configurée pour acquérir, par l'intermédiaire d'une caméra infrarouge, une image d'éclairage infrarouge thermique incluant une image de la cible irradiée par la lumière infrarouge thermique ;
   une unité d'acquisition d'image infrarouge thermique (1) configurée pour acquérir, par l'intermédiaire de la caméra infrarouge, une image infrarouge thermique incluant l'image de la cible ;
   une unité d'acquisition d'image de lumière visible (3) configurée pour acquérir une image de lumière visible incluant l'image de la cible ;
   une unité de calcul (4) configurée pour calculer une plage d'expansion d'image de la cible sur la base de l'image de la cible dans l'image de lumière visible acquise et de l'image de la cible dans l'image d'éclairage IR acquise, en comparant l'image d'éclairage infrarouge thermique à l'image de lumière visible, l'expansion d'image se produisant dans les formes extérieures de l'image infrarouge thermique de la cible, et pour calculer une quantité d'expansion d'image en intégrant des luminances dans la plage d'expansion d'image de l'image infrarouge thermique ;
   une unité d'ajout (4) configurée pour ajouter la quantité d'expansion d'image calculée dans l'image infrarouge thermique acquise à la luminance de l'image infrarouge thermique de la cible ; et
   une unité de mesure (5) configurée pour mesurer une température de la cible sur la base de l'image infrarouge thermique de la cible à laquelle la quantité d'expansion d'image a été ajoutée.

2. Dispositif de mesure de température, comprenant :

   une unité d'éclairage d'infrarouge thermique (2) configurée pour irradier avec une lumière infrarouge thermique une cible dont la température doit être mesurée ;
   une unité d'acquisition d'image par éclairage infrarouge thermique (1) configurée pour acquérir, par l'intermédiaire d'une caméra infrarouge, une image d'éclairage infrarouge thermique incluant une image de la cible irradiée par la lumière infrarouge thermique ;
   une unité d'acquisition d'image infrarouge thermique (1) configurée pour acquérir, par l'intermédiaire de la caméra infrarouge, une image infrarouge thermique incluant l'image de la cible ;
   une unité d'éclairage de mesure de distance (7) configurée pour irradier la cible avec une lumière d'éclairage de mesure de distance pour mesurer une distance ;

une unité d'acquisition d'image de distance (6) configurée pour acquérir une image de distance incluant l'image de la cible irradiée avec la lumière d'éclairage de mesure de distance ;

une unité de calcul (4) configurée pour calculer une plage d'expansion d'image de la cible sur la base de l'image de la cible dans l'image de distance acquise et de l'image de la cible dans l'image d'éclairage infrarouge thermique acquise, en comparant l'image d'éclairage infrarouge thermique à l'image de distance, l'expansion d'image se produisant dans les formes extérieures de l'image infrarouge thermique de la cible, et pour calculer une quantité d'expansion d'image en intégrant des luminances dans la plage d'expansion d'image de l'image infrarouge thermique ;

une unité d'ajout (4) configurée pour ajouter la quantité d'expansion d'image calculée dans l'image infrarouge thermique acquise à la luminance de l'image infrarouge thermique de la cible ;

une première unité d'acquisition (4) configurée pour acquérir une distance par rapport à la cible sur la base de l'image de distance acquise ;

une seconde unité d'acquisition (4) configurée pour acquérir une émissivité de la cible sur la base de la distance acquise ; et

une unité de mesure (5) configurée pour mesurer une température de la cible sur la base de l'image infrarouge thermique de la cible à laquelle la quantité d'expansion d'image a été ajoutée, et de l'émissivité acquise de la cible.

3. Dispositif de mesure de température, comprenant :

une unité d'éclairage d'infrarouge thermique (2) configurée pour irradier avec une lumière infrarouge thermique une cible dont la température doit être mesurée ;

une unité d'acquisition d'image par éclairage infrarouge thermique (1) configurée pour acquérir, par l'intermédiaire d'une caméra infrarouge, une image d'éclairage infrarouge thermique incluant une image de la cible irradiée par la lumière infrarouge thermique ;

une unité d'acquisition d'image infrarouge thermique (1) configurée pour acquérir, par l'intermédiaire de la caméra infrarouge, une image infrarouge thermique incluant l'image de la cible ;

une unité d'acquisition d'image de lumière visible (3) configurée pour acquérir une image de lumière visible incluant l'image de la cible ;

une unité d'éclairage de mesure de distance (7) configurée pour irradier la cible avec une lumière d'éclairage de mesure de distance pour mesurer une distance ;

une unité d'acquisition d'image de distance (6) configurée pour acquérir une image de distance incluant l'image de la cible irradiée avec la lumière d'éclairage de mesure de distance ;

une unité de calcul (4) configurée pour calculer une plage d'expansion d'image de la cible sur la base de l'image de la cible dans l'image de lumière visible acquise et de l'image de la cible dans l'image de distance acquise et de l'image de la cible dans l'image d'éclairage infrarouge thermique acquise, en comparant l'image d'éclairage infrarouge thermique à l'image de lumière visible, l'expansion d'image se produisant dans les formes extérieures de l'image infrarouge thermique de la cible, et pour calculer une quantité d'expansion d'image en intégrant des luminances dans la plage d'expansion d'image de l'image infrarouge thermique ;

une unité d'ajout (4) configurée pour ajouter la quantité d'expansion d'image calculée dans l'image infrarouge thermique acquise à la luminance de l'image infrarouge thermique de la cible ; et

une première unité d'acquisition (4) configurée pour acquérir une distance par rapport à la cible sur la base de l'image de distance acquise ;

une seconde unité d'acquisition (4) configurée pour acquérir une émissivité de la cible sur la base de la distance acquise ; et

une unité de mesure (5) configurée pour mesurer une température de la cible sur la base de l'image infrarouge thermique de la cible à laquelle la quantité d'expansion d'image a été ajoutée, et de l'émissivité acquise de la cible.

4. Procédé de mesure de température, comprenant les étapes consistant à :

par l'intermédiaire d'une unité d'éclairage infrarouge thermique (2), irradier avec une lumière infrarouge thermique une cible dont la température doit être mesurée ;

par l'intermédiaire d'une unité d'acquisition d'image par éclairage infrarouge thermique (1), acquérir, par l'intermédiaire d'une caméra infrarouge, une image d'éclairage infrarouge thermique comprenant une image de la cible irradiée avec la lumière infrarouge thermique ;

par l'intermédiaire d'une unité d'acquisition d'image infrarouge thermique (1), acquérir, par l'intermédiaire de la caméra infrarouge, une image infrarouge thermique comprenant l'image de la cible ;

par l'intermédiaire d'une unité d'acquisition d'image de lumière visible (3), acquérir une image de lumière visible comprenant l'image de la cible ;

par l'intermédiaire d'une unité de calcul (4), calculer une plage d'expansion d'image de l'image de la cible sur la base de l'image de la cible dans l'image de lumière visible acquise et de l'image de la cible dans l'image d'éclairage IR acquise en comparant l'image d'éclairage infrarouge thermique à l'image de lumière visible, l'expansion d'image se produisant dans les formes extérieures de l'image infrarouge thermique de la cible, et pour calculer une quantité d'expansion d'image en intégrant des luminances dans la plage d'expansion d'image de l'image infrarouge thermique ;

par l'intermédiaire d'une unité d'ajout (4), ajouter la quantité d'expansion d'image calculée dans l'image infrarouge thermique acquise à la luminance de l'image infrarouge thermique de la cible ; et

par l'intermédiaire d'une unité de mesure (5), mesurer une température de la cible sur la base de l'image infrarouge thermique de la cible à laquelle la quantité d'expansion d'image a été ajoutée.

**5.** Procédé de mesure de température, comprenant les étapes consistant à :

par l'intermédiaire d'une unité d'éclairage infrarouge thermique (2), irradier avec une lumière infrarouge thermique une cible dont la température doit être mesurée ;

par l'intermédiaire d'une unité d'acquisition d'image par éclairage infrarouge thermique (1), acquérir, par l'intermédiaire d'une caméra infrarouge, une image d'éclairage infrarouge thermique comprenant une image de la cible irradiée avec la lumière infrarouge thermique ;

par l'intermédiaire d'une unité d'acquisition d'image infrarouge thermique (1), acquérir, par l'intermédiaire de la caméra infrarouge, une image infrarouge thermique comprenant l'image de la cible ;

par l'intermédiaire d'une unité d'éclairage de mesure de distance, irradier la cible avec une lumière d'éclairage de mesure de distance pour mesurer une distance ;

par l'intermédiaire d'une unité d'acquisition d'image de distance (6), acquérir une image de distance incluant l'image de la cible irradiée avec la lumière d'éclairage de mesure de distance ;

par l'intermédiaire d'une unité de calcul (4), calculer une plage d'expansion d'image de l'image de la cible sur la base de l'image de la cible dans l'image de lumière visible acquise et de l'image de la cible dans l'image d'éclairage infrarouge acquise en comparant l'image d'éclairage infrarouge thermique à l'image de distance, l'expansion d'image se produisant dans les formes extérieures de l'image infrarouge thermique de la cible, et pour calculer une quantité d'expansion d'image en intégrant des luminances dans la plage d'expansion d'image de l'image infrarouge thermique ;

par l'intermédiaire d'une unité d'ajout (4), ajouter la quantité d'expansion d'image calculée dans l'image infrarouge thermique acquise à la luminance de l'image infrarouge thermique de la cible ; et

par l'intermédiaire d'une première unité d'acquisition (4), acquérir une distance par rapport à la cible sur la base de l'image de distance acquise ;

par l'intermédiaire d'une seconde unité d'acquisition (4), acquérir une émissivité de la cible sur la base de la distance acquise ; et

par l'intermédiaire d'une unité de mesure (5), mesurer une température de la cible d'infrarouge thermique sur la base de l'image infrarouge thermique de la cible à laquelle la quantité d'expansion d'image a été ajoutée, et de l'émissivité de la cible.

**6.** Procédé de mesure de température, comprenant les étapes consistant à :

par l'intermédiaire d'une unité d'éclairage infrarouge thermique (2), irradier avec une lumière infrarouge thermique une cible dont la température doit être mesurée ;

par l'intermédiaire d'une unité d'acquisition d'image par éclairage infrarouge thermique (1), acquérir, par l'intermédiaire d'une caméra infrarouge, une image d'éclairage infrarouge thermique comprenant une image de la cible irradiée avec la lumière infrarouge thermique ;

par l'intermédiaire d'une unité d'acquisition d'image infrarouge thermique (1), acquérir, par l'intermédiaire de la caméra infrarouge, une image infrarouge thermique comprenant l'image de la cible ;

par l'intermédiaire d'une unité d'acquisition d'image de lumière visible (3), acquérir une image de lumière visible comprenant l'image de la cible ;

par l'intermédiaire d'une unité d'éclairage de mesure de distance (7), irradier la cible avec une lumière d'éclairage de mesure de distance pour mesurer une distance ;

par l'intermédiaire d'une unité d'acquisition d'image de distance (6), acquérir une image de distance incluant l'image de la cible irradiée avec la lumière d'éclairage de mesure de distance ;

par l'intermédiaire d'une unité de calcul (4), calculer une plage d'expansion d'image de l'image de la cible sur la base d'une de l'image de la cible dans l'image de lumière visible acquise et de l'image de la cible dans l'image de distance acquise, et de l'image de la cible dans l'image d'éclairage infrarouge thermique acquise en comparant l'image d'éclairage infrarouge thermique à l'image de lumière visible ou l'image de distance, l'expansion d'image se produisant dans les formes extérieures de l'image infrarouge thermique de la cible, et pour calculer une quantité d'expansion d'image en intégrant des luminances dans la plage d'expansion d'image de l'image infrarouge thermique ;

par l'intermédiaire d'une unité d'ajout (4), ajouter la quantité d'expansion d'image calculée dans l'image infrarouge thermique acquise à la luminance de l'image infrarouge thermique de la cible ; et

par l'intermédiaire d'une première unité d'acquisition (4), acquérir une distance par rapport à la cible sur la base de l'image de distance acquise ;

par l'intermédiaire d'une seconde unité d'acquisition (4), acquérir une émissivité de la cible sur la base de la distance acquise ; et

par l'intermédiaire d'une unité de mesure (5), mesurer une température de la cible d'infrarouge thermique sur la base de l'image infrarouge thermique de la cible à laquelle la quantité d'expansion d'image a été ajoutée, et de l'émissivité de la cible.

# FIG. 1

EP 4 332 526 B1

# FIG. 2A

Visible Light Image KG

Front Image

# FIG. 2B

Intensity of Visible Light KK at
Broken Line Part HS of Front Image

# FIG. 3A

IR Image IRG

Front Image

GK2    GK1

HS

Image
Expansion
ZH

# FIG. 3B

Intensity of IR Light IRK at
Broken Line Part HS of Front Image

Intensity of
IR Light
IRK

GZ2    GZ1

# FIG. 4A

IR Illumination Image IRSG

Front Image

GK2   GK1

HS

Image Expansion
ZH

# FIG. 4B

Intensity of IR Illumination Light IRSK at
Broken Line Part HS of Front Image

Intensity of IR Illumination Light IRSK

GZ2   GZ1

# FIG. 5

# FIG. 6

START

Acquire IR Image IRG,
IR Illumination Image IRSG, and
Visible Light Image KG — ST11

Calculate Distances L1 and L2 to
Persons JB1 and JB2 — ST12

Derive Outer Shapes GK1 and
GK2 of Persons JB1 and JB2 — ST13

Calculate Image Expansion Range ZHH — ST14

Calculate Image Expansion Amount ZHR — ST15

Add Image Expansion Amount ZHR to
Luminances of Images GZ1 and
GZ2 of Persons JB1 and JB2 — ST16

Measure Temperatures of Persons JB1 and JB2 — ST17

END

# FIG. 7

IR Illumination Image IRSG

Front Image

GK2　　　GK1

Image
Expansion
Range
ZHH

# FIG. 8A

Signal Intensity

Visible Light Image KG

IR Illumination Image IRSG

Image Expansion Range ZHH

Image Expansion Range ZHH

In Case of Person JB1

# FIG. 8B

Signal Intensity

Integration and Addition

Integration and Addition

IR Image IRG

Image Expansion Amount ZHR

In Case of Person JB1

# FIG. 9

TMD

Temperature Measuring Device

IR Light IRK

JB1

JB2

IR Illumination Light IRSK

Near Infrared Light NK

L1

L2

IR Image IRG

1 IR Image Acquiring Unit

2 IR Illuminating Unit

IR Illumination Image IRSG

6 Distance Image Acquiring Unit

Distance Image DG

7 Near Infrared Light Illuminating Unit

4 Processing Unit

5 Measuring Unit

# FIG. 10A

Distance Image DG

Front Image

# FIG. 10B

Intensity of Near Infrared Light NK at Broken Line Part HS of Front Image

# FIG. 11

```
          ┌─────────┐
          │  START  │
          └─────────┘
               │
               ▼
  ┌──────────────────────────────┐
  │      Acquire IR Image IRG,   │ ~ST21
  │  IR Illumination Image IRSG, │
  │     and Distance Image DG    │
  └──────────────────────────────┘
               │
               ▼
  ┌──────────────────────────────┐
  │    Calculate Distances L1    │ ~ST22
  │   and L2 to Persons JB1      │
  │         and JB2              │
  └──────────────────────────────┘
               │
               ▼
  ┌──────────────────────────────┐
  │   Derive Outer Shapes GK1    │ ~ST23
  │  and GK2 of Persons JB1      │
  │         and JB2              │
  └──────────────────────────────┘
               │
               ▼
  ┌──────────────────────────────┐
  │  Calculate Image Expansion   │ ~ST24
  │          Range ZHH           │
  └──────────────────────────────┘
               │
               ▼
  ┌──────────────────────────────┐
  │  Calculate Image Expansion   │ ~ST25
  │          Amount ZHR          │
  └──────────────────────────────┘
               │
               ▼
  ┌──────────────────────────────┐
  │  Add Image Expansion Amount  │ ~ST26
  │   ZHR to Luminances of       │
  │   Images GZ1 and GZ2 of      │
  │    Persons JB1 and JB2       │
  └──────────────────────────────┘
               │
               ▼
  ┌──────────────────────────────┐
  │   Calculate Reflectivities   │ ~ST27
  │   R1 and R2 of Persons       │
  │  JB1 and JB2 (Calculate      │
  │  Emissivities ε1 and ε2 of   │
  │    Persons JB1 and JB2)      │
  └──────────────────────────────┘
               │
               ▼
  ┌──────────────────────────────┐
  │ Measure Temperatures of      │ ~ST28
  │  Persons JB1 and JB2         │
  └──────────────────────────────┘
               │
               ▼
          ┌─────────┐
          │   END   │
          └─────────┘
```

# FIG. 12

TMD

Temperature Measuring Device

IR Image IRG

IR Light IRK

IR Illumination
Light IRSK

JB1

JB2

Visible Light
KK

Near Infrared
Light NK

1 IR Image Acquiring Unit

2 IR Illuminating Unit

3 Visible Light Image Acquiring Unit

6 Distance Image Acquiring Unit

7 Near Infrared Light Illuminating Unit

IR Illumination Image IRSG

Distance Image DG

4 Processing Unit

5 Measuring Unit

L1

L2

EP 4 332 526 B1

# FIG. 13

START

↓

Acquire IR Image IRG,
IR Illumination Image IRSG,
Visible Light Image KG, and Distance Image DG  ∼ST31

↓

Calculate Distances L1 and
L2 to Persons JB1 and JB2  ∼ST32

↓

Derive Outer Shapes GK1 and
GK2 of Persons JB1 and JB2  ∼ST33

↓

Calculate Image Expansion Range ZHH  ∼ST34

↓

Calculate Image Expansion Amount ZHR  ∼ST35

↓

Add Image Expansion Amount ZHR to
Luminances of Images GZ1 and
GZ2 of Persons JB1 and JB2  ∼ST36

↓

Calculate Reflectivities R1 and
R2 of Persons JB1 and JB2
(Calculate Emissivities ε1 and
ε2 of Persons JB1 and JB2)  ∼ST37

↓

Measure Temperatures of Persons JB1 and JB2  ∼ST38

↓

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2012307046 A1
- US 7813889 B2

- JP 2020153737 A

### Non-patent literature cited in the description

- **FUWEN LAI**. Thermal image enhancement through the deconvolution methods for low-cost infrared cameras. *QIRT JOURNAL - QUANTITATIVE INFRARED THERMOGRAPHY AN INTERNATIONAL JOURNAL ON IR THERMOGRAPHY*, 09 May 2018, 1-17